# EUROPEAN PATENT APPLICATION

(11) **EP 2 560 078 A2**
(43) Date of publication of application: **20.02.2013**
(21) Application number: 12172929.7
(22) Date of filing: 21.06.2012
(51) Int. Cl.: G06F 3/041, G06F 3/044

(54) **Control system of a touch panel and a control method thereof**

(30) Priority: 18.08.2011 CN 201110237989
(71) Applicant: TPK Touch Solutions Inc., Neihu Taipei City 114 (TW)
(72) Inventor: Chu, Chun-Hsueh, 300 Hsinchu City (TW); Chiu, Jui-Jung, 310 Zhudong (TW)
(74) Representative: Schwerbrock, Florian

(57) **Abstract**

A control system of a touch panel comprises a voltage controlled oscillator and a signal processing module. The voltage controlled oscillator is used for converting a direct current voltage signal that corresponds to a sensing signal of said touch panel into a sinusoidal signal. The signal processing module counts the frequency of the sinusoidal signal. The voltage controlled oscillator of the control system of touch panel converts direct current voltage signal into sinusoidal signal. Due to a wide change in the range of frequency of the sinusoidal signal that is outputted from the voltage controlled oscillator, the signal is not easily affected by noise, and thus, the signal-to-noise ratio of control system is comparatively higher. The present disclosure also provides a control method of touch panel.

## Description

### BACKGROUND

### TECHNICAL FIELD

The present disclosure relates to a touch circuit and a control method thereof, and more particularly to a control system and a control method of a touch panel.

### DESCRIPTION OF THE RELATED ART

Traditional input methods of an electronic computer adopt external devices such as keyboard, mouse, and track pad as input interfaces. However, such external input devices are heavy and are oversized for carrying. Thinning of electronic products has been long desired in the electronic industry. Due to a huge demand of thin electronic devices, touch panels have been popular with customers in portable electronic goods. Apart from the application in the portable electronic goods touch panel market has also gradually expanded to information appliances, public information products, communication apparatus, office automation equipments, information collection devices, and so on. Thus, research and development of touch panels is gradually becoming the central focus of any electronic industry.

Generally, a touch panel needs a control system for determining and controlling position of a touch point. Analog-digital converter, an important component of control system, is used for directly converting direct current (DC) voltage signal from analog signal into digital signal. However, output signals are easily affected by ambient noise (such as Thermal noise and Flicker noise in the control system) with similar frequency, so as to reduce signal-to-noise ratio (SNR) of control system. Besides, the SNR becomes lower when input voltage of the control system became lesser such as when the input voltage gradually drops in the range of 5 volts, 3 volts, 1.8 volts, and 1.2 volts. Therefore, there is a need to increase SNR of a control system in a touch panel efficiently.

### SUMMARY OF THE INVENTION

In view of the aforementioned situation, the present disclosure provides a control system of a touch panel that has been changed to conduct the signal processing with a sinusoidal signal. The present disclosure solves the problem of a system where, the signal-to-noise ratio is reduced because of easy influence by noise through the characteristic of wide change range of frequency of the sinusoidal signal.

In one embodiment of the present disclosure, control system of a touch panel comprises: a voltage controlled oscillator, which is used to convert direct current voltage signal that is corresponding to a sensing signal of touch panel into a sinusoidal signal; and a signal processing module to count the frequency of the sinusoidal signal.

In one embodiment of the present disclosure, voltage controlled oscillator of the control system of the touch panel is able to convert direct current voltage signal into sinusoidal signal. Since, there is a change in the range of frequency of the sinusoidal signal that is outputted from the voltage controlled oscillator and since the frequency value is wide enough, the signal is not easily affected by noise, and thus, the signal-to-noise ratio of control system is higher.

Further, the control system of the touch panel comprises a signal detection module, which is electrically connected with the touch panel for detecting the sensing signal of the touch panel.

In an embodiment of the present disclosure,, the signal detection module comprises: an integrator to convert the sensing signal into direct current voltage signal; a sampling and holding circuit for sampling and holding voltage level of the direct current voltage signal; and an amplifier for amplifying the voltage level of the direct current voltage signal.

In an embodiment, the signal processing module comprises a frequency counter for counting the frequency of the sinusoidal signal.

Further, the signal processing module also comprises a low-noise amplifier, which is used for amplifying the amplitude of the sinusoidal signal.

Further, the control system of touch panel also comprises a pulse signal driving module that is used for generating a pulse driving signal which is transported to the touch panel. The touch panel couples to induce the sensing signal based on the pulse driving signal.

Further, the control system of touch panel also comprises a multiplexer, which is used for receiving the pulse driving signal and the sensing signal.

Further, the control system of the touch panel also comprises a controlling unit that is used for controlling the operation of the pulse signal driving module and for determining touch motions based on the frequency.

In another embodiment, the present disclosure provides a control method of a through which the touch panel has a signal-to-noise ratio that is less affected by an input voltage.

In an embodiment, control method of a touch panel comprises the steps of: converting a direct current voltage signal that corresponds to a sensing signal of the touch panel into a sinusoidal signal; and counting frequency of the sinusoidal signal.

In one embodiment of the present disclosure, the control method of the touch panel adopts a voltage controlled oscillator to convert direct current voltage signal into a sinusoidal signal. Since, there is a change in range of frequency of the sinusoidal signal outputted from the voltage controlled oscillator and since the frequency value is wide enough, the signal is not easily affected by noise, and thus, the signal-to-noise ratio is higher.

Further, the control method also comprises: converting the sensing signal into the direct current voltage signal; sampling and holding voltage level of the direct current voltage signal; and amplifying the voltage level of the direct current voltage signal.

Further, the control method also determines touch motion based on the frequency of the sinusoidal signal.

Further, the control method also discloses amplifying the amplitude of the sinusoidal signal for counting the frequency of the sinusoidal signal.

### BRIEF DESCRIPTION OF THE DRAWINGS

FIG. 1 is a schematic block diagram of an embodiment of a control system of touch panel according to the present disclosure;

FIG. 2 is a schematic block diagram of a signal detection module of the control system of touch panel as shown in FIG. 1;

FIG. 3 is a schematic block diagram of a signal processing module of the control system of touch panel as shown in FIG. 1;

FIG. 4 is a flowchart of an embodiment of a control method of touch panel according to the present disclosure; and

FIG. 5 is an embodiment flowchart of step 201 of the control method of touch panel as shown in FIG.4.

### DETAILED DESCRIPTION OF THE EMBODIMENTS

Following is the detailed description of the present disclosure that is integrated with description of the drawings.

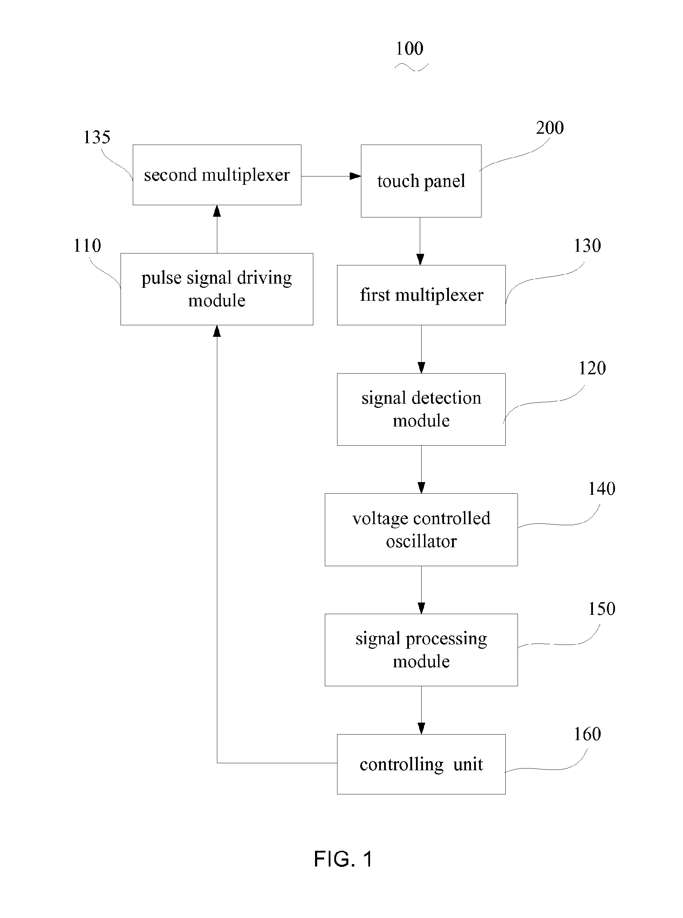

With reference to FIG. 1, there is shown a schematic block diagram of an embodiment of a control system of touch panel according to the present disclosure. The control system 100 is used for controlling a touch panel 200 to determine each and every touch motion on the touch panel 200 and to obtain an actual touch position. The control system 100 comprises a voltage controlled oscillator (VCO) 140 and a signal processing module 150. The voltage controlled oscillator 140 is used for converting a direct current voltage signal that corresponds to a sensing signal of the touch panel 200 into a sinusoidal signal, and the signal processing module 150 is used for counting the frequency of the sinusoidal signal. The control system 100 further comprises a pulse signal driving module 110, a signal detection module 120, a first multiplexer 130, a second multiplexer 135, and a controlling unit 160. The internal structure of the above components and the motion and connection method thereof are described more in details in the following.

In an embodiment of the present disclosure, the controlling unit 160 controls the pulse signal driving module 110 to generate a pulse driving signal, so that the pulse driving signal is transported to the touch panel 200 through the second multiplexer 135. The touch panel 200 couples to induce a sensing signal according to the pulse driving signal. The sensing signal is further transported to the signal detection module 120 through the first multiplexer 130. In the present embodiment, the touch panel 200 is a projected capacitive touch panel, and a plurality of driving electrodes (Not shown) and a plurality of sensing electrodes (Not shown) are disposed on the touch panel 200 to form a distributed array. The pulse signal driving module 110 inputs the pulse driving signal onto the driving electrodes to induce electric field between the driving electrode and sensing electrode, so as to form an electric capacitance. At the time the users touch the touch panel 200, electric field between the driving electrode and sensing electrode of touch position is affected by user's finger, and the capacity of the electric capacitance of touch position changes. Thereby, the sensing signal that is induced on the basis of the pulse driving signal will also be different to some extent.

In an embodiment of the present disclosure, the signal detection module 120 is connected with the touch panel 200 through the first multiplexer 130 to detect the sensing signal of touch panel 200. The module 120 outputs a direct current (DC) voltage signal. The voltage controlled oscillator 140 is used for converting the DC voltage signal into a sinusoidal signal. If the touch panel 200 has not been touched, voltage level of DC voltage signal that is outputted from the signal detection module 120 is high. The higher DC voltage signal would be converted into high-frequency sinusoidal signal by the voltage controlled oscillator 140. On the other hand, if the touch panel 200 has been touched, voltage level of DC voltage signal that is outputted from the signal detection module 120 is low. The lower DC voltage signal would be converted into low-frequency sinusoidal signal by the voltage controlled oscillator 140. Further, the signal processing module 150 is connected with the voltage controlled oscillator 140 for counting frequency of the sinusoidal signal. The controlling unit 160 is connected with the signal processing module 150, which is used for confirming whether there is any touch motion and further determining the touch position based on the frequency of the sinusoidal signal outputted from the signal processing module 150.

In another embodiment of the present disclosure, the pulse signal driving module 110, the signal detection module 120, the first multiplexer 130, the second multiplexer 135, the voltage controlled oscillator 140, the signal processing module 150, and the controlling unit 160 are designed as a System-on-Chip (SOC) in the practical design for driving and controlling the touch panel 200. In another embodiment of the present disclosure, the first multiplexer 130 and the second multiplexer 135 can be omitted. Besides, the touch panel 200 is directly connected with the pulse signal driving module 110 and the signal processing module 150. In yet another embodiment of the present disclosure, the pulse signal driving module 110 is to be replaced by other signal driving module according to a touch panel 200, wherein the touch panel 200 can be of any type: (i) capacitive touch panel or (ii) resistance touch panel and so on.

In one embodiment of the present disclosure, since the voltage controlled oscillator 140 of the control system 100 is able to convert the DC voltage signal into sinusoidal signal, and the change range of frequency of sinusoidal signal that is outputted from the voltage controlled oscillator 140 is wide, it is not easily affected by noise, and therefore results in a control system 100 that has increased the overall signal-to-noise ratio (SNR).

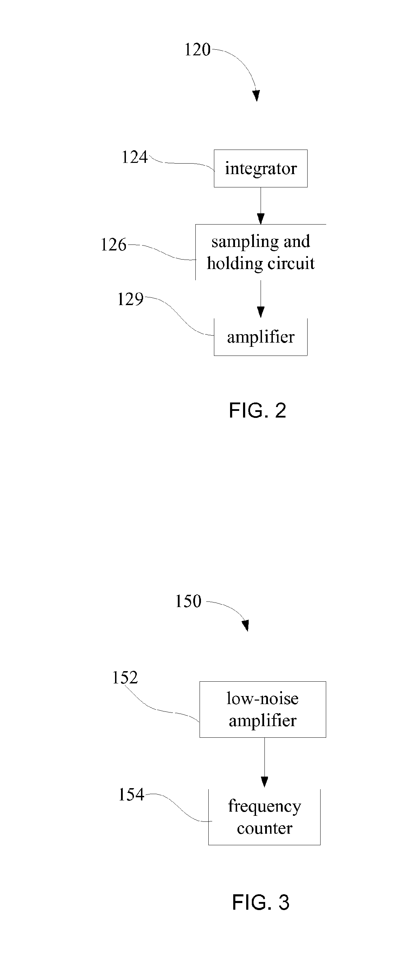

With reference to FIG. 2, a schematic block diagram of a signal detection module of the control system of touch panel shown in FIG. 1 is depicted. The signal detection module 120 comprises an integrator 124, a sampling and holding circuit 126, and an amplifier 129, which are electrically connected as per the configuration.

In one embodiment, the integrator 124 is used for converting the sensing signal into the DC voltage signal. The sensing signal, which is given as output from the touch panel 200, is accumulated for several times by the integrator 124, wherein the integrator 124 outputs the DC voltage signal with high level.

Further, the sampling and holding circuit 126 is used for sampling and holding the voltage level of DC voltage signal outputted by the integrator 124. The sampling and holding circuit 126 samples the DC voltage signal outputted from the integrator 124 for collecting the momentary voltage level of DC voltage signal and holding the same voltage level of DC voltage signal to output.

Further, the amplifier is used for amplifying voltage level of the DC voltage signal, and supply the amplified DC voltage signal to the voltage controlled oscillator 140. Specific in the present embodiment, the amplifier 129 is a programmable gain amplifier (PGA).

With reference to FIG. 3, schematic block diagram of a signal processing module of a control system of touch panel as shown in FIG. 1 is depicted. The signal processing module 150 comprises a low-noise amplifier 152 and a frequency counter 154, which are electrically connected.

The low-noise amplifier 152 is used for amplifying amplitude of sinusoidal signal that is outputted by the voltage controlled oscillator 140.

The frequency counter 154 is used for counting frequency of the amplified sinusoidal signal. For example, if the frequency of sinusoidal signal is 8 MHz, the counting result of the frequency counter 154 is 80.

Therefore, the controlling unit 160 is able to determine if there is a touch motion according to the frequency outputted from the frequency counter 154, and further determines the actual touch position. Till the time the touch panel 200 has not been touched, the DC voltage signal is high, the voltage controlled oscillator 140 outputs high-frequency sinusoidal signal, and the frequency counter 154 counts more frequency. After the touch panel 200 is touched, the DC voltage signal is low, the voltage controlled oscillator 140 outputs low-frequency sinusoidal signal, and the frequency counter 154 counts less frequency. Hence, the controlling unit 160 can determine if there is touch motion according to the frequency count of the sinusoidal signal.

Finally, the signal-to-noise ratio calculation formula of the present embodiment is: SNR= (FI-F2)/Delta F. wherein, F1 is the frequency of sinusoidal signal outputted from the voltage controlled oscillator 140 when the touch panel 200 has not been touched; F2 is the frequency of sinusoidal signal that outputted from the voltage controlled oscillator 140 after the touch panel 200 has been touched; Delta F is offset of frequency that is caused by noise. Thus, the signal-to-noise ratio of the control system 100, in a variety of design environments, can be simply verified by the formula.

In one embodiment of the present disclosure as illustrated in Fig. 3, control system 100 of the present embodiment has following advantages:

Input signal of the voltage controlled oscillator 140 is DC voltage signal. While the touch panel 200 has not been touched, the DC voltage signal is high, the voltage controlled oscillator 140 outputs high-frequency sinusoidal signal. When the touch panel 200 is touched, the DC voltage signal is low and the voltage controlled oscillator 140 outputs low-frequency sinusoidal signal. Since, the change range of frequency of the sinusoidal signal is wide, the signal is not easily affected by noise. Therefore, even when the input voltage of the control system 100 gets smaller in value, the signal-to-noise ratio is not affected.

(2) With the operable frequency of the voltage controlled oscillator 140 being in the range of a few MHz to a few GHz, noise such as thermal noise and flicker noise are unable to influence the sinusoidal signal which is outputted from the voltage controlled oscillator 140. Thus, the thermal noise and flicker noise does not reduce the overall signal-to-noise ratio.

(3) The cost of voltage controlled oscillator 140 is lower than that of the analog-to-digital converter, and using the voltage controlled oscillator 140 can help in reducing the cost of control system 100.

(4) As phase noise of the voltage controlled oscillator 140 is comparatively lower, and the signal-to-noise ratio is higher, the control system 100 is not only applicable for small-size touch panel but also for big-size touch panel.

(5) Parameters of the integrator 124 and amplifier 129 can be further adjusted for obtaining higher signal-to-noise ratio.

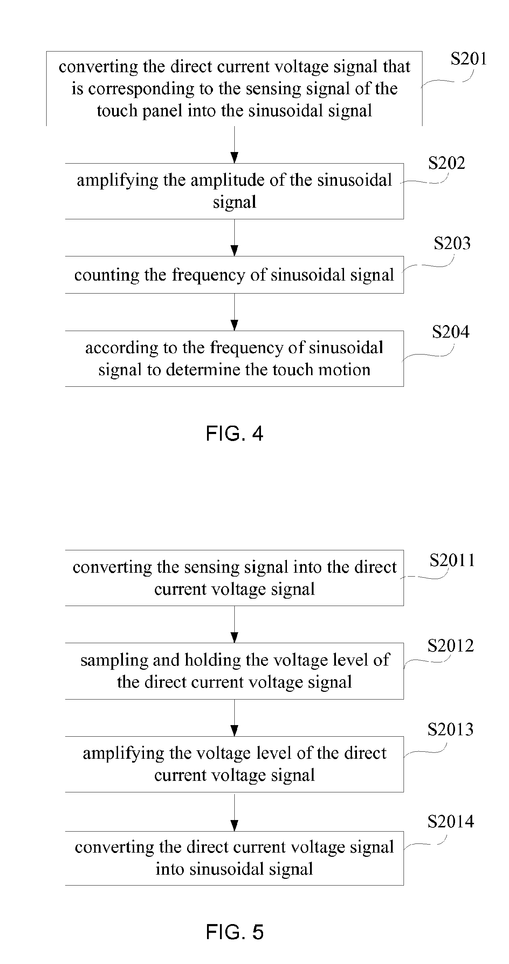

FIG. 4 illustrates a flowchart of a control method of touch panel according to the present disclosure. The control method comprises the steps of:

Step S201: a DC voltage signal of a corresponding sensing signal of the touch panel is converted into a sinusoidal signal.

Fig. 5 illustrates further steps of Step S201: S2011∼S2013.

At step S2011, the method converts sensing signal into DC voltage signal.

A pulse signal driving module 110 generates a pulse driving signal of the touch panel 200. A signal detection module 120 detects the sensing signal outputted from the touch panel 200. If the touch panel 200 has been touched, the sensing signal outputted from the touch panel 200 will be changed, For example, sensing signals of the touch panel when touched are different from when the panel is untouched. Moreover, the present embodiment adopts an integrator 124 to convert the sensing signal into DC voltage signal.

At step S2012, the method samples and holds voltage level of the DC voltage signal.

In the present embodiment, the sampling and holding circuit 126 is used for sampling and holding the voltage level of the DC voltage signal.

At step S2013, the method amplifies the voltage level of the DC voltage signal. In the present embodiment, the method adopts amplifier 129 to amplify the DC voltage signal.

At step S2014, the method converts the DC voltage signal into sinusoidal signal. In the present embodiment, the method adopts voltage controlled oscillator 140 to convert the DC voltage signal into sinusoidal signal. While the touch panel 200 has not been touched, voltage level of sensing signal is high, and the voltage controlled oscillator 140 outputs high-frequency sinusoidal signal based on the high voltage level. While the touch panel 200 is being touched, voltage level of sensing signal is low, and the voltage controlled oscillator 140 outputs low-frequency sinusoidal signal based on the low voltage level.

Step S202: amplifying the amplitude of the sinusoidal signal. Specific in the present embodiment, amplitude of the sinusoidal signal is amplified by the low-noise amplifier 152.

Step S203: counting the frequency of sinusoidal signal. Specific in the present embodiment, the frequency of sinusoidal signal is counted by the signal processing module 150. The sinusoidal signal that is outputted from the voltage controlled oscillator 140 is different when the touch panel 200 is touched from when it is not touched. Meanwhile, the signal processing module 150 is able to work out each frequency of sinusoidal signal when the touch panel 200 has not been touched and has been touched. In particular, the frequency of sinusoidal signal is counted by the frequency counter 154.

Step S204: determining the touch motion based on the frequency of sinusoidal signal.

In one embodiment, step S202 is omitted if the amplitude has reached a standard value after the DC voltage signal has been converted into sinusoidal signal.

In another embodiment, the voltage controlled oscillator of the control system enables conversion of a DC voltage signal, based on a sensing signal, into a sinusoidal signal. Due to a wide change in the range of frequency of sinusoidal signal outputted from the voltage controlled oscillator, the sinusoidal signal is not easily affected by noise, and hence, the signal-to-noise ratio of control system is comparative higher.

Although aforesaid embodiment has presented several modes for carrying out the present disclosure with specific description, the modes are not intended to limit the scope of the disclosure. It is apparent to those skilled in the art that a variety of modifications and changes may be made without departing from the scope of the present disclosure, which is intended to be defined by the appended claims. Thus, the scope of patent of the present disclosure is subject to the attached claims.

## Claims

1. A control system of a touch panel, comprising:
a voltage controlled oscillator converting a direct current voltage signal into a sinusoidal signal, wherein said direct current voltage signal is based on a sensing signal of the touch panel; and
a signal processing module counting frequency of said sinusoidal signal.

2. The control system of touch panel as claimed in claim 1, further comprising a signal detection module, wherein said signal detection module is electrically connected with said touch panel and detects said sensing signal of the touch panel.

3. The control system of touch panel as claimed in claim 2, wherein said signal detection module further comprises:
an integrator converting said sensing signal into said direct current voltage signal;
a sampling and holding circuit for sampling and holding voltage level of said direct current voltage signal; and
an amplifier for amplifying the voltage level of said direct current voltage signal.

4. The control system of touch panel as claimed in claim 1, wherein said signal processing module comprises a frequency counter.

5. The control system of touch panel as claimed in claim 1, wherein said signal processing module further comprises a low-noise amplifier for amplifying amplitude of the sinusoidal signal.

6. The control system of touch panel as claimed in claim 1, further comprising a pulse signal driving module for generating a pulse driving signal for transporting to the touch panel, wherein said touch panel couples to induce said sensing signal based on the pulse driving signal.

7. The control system of touch panel as claimed in claim 6, further comprising a multiplexer for receiving said pulse driving signal and said sensing signal.

8. The control system of touch panel as claimed in claim 6, further comprising a controlling unit for controlling operation of said pulse signal driving module and determining touch motions based on frequency.

9. A control method of a touch panel, comprising the steps of:
converting a direct current voltage signal into a sinusoidal signal, wherein said direct current voltage signal is based on a sensing signal of said touch panel; and counting frequency of said sinusoidal signal.

10. The control method of touch panel as claimed in claim 9, further comprising:
converting said sensing signal into said direct current voltage signal;
sampling and holding voltage level of said direct current voltage signal; and
amplifying the voltage level of said direct current voltage signal.

11. The control method of touch panel as claimed in claim 9, further comprising:
determining touch motion based on frequency of said sinusoidal signal.

12. The control method of touch panel as claimed in claim 9, further comprising:
amplifying amplitude of said sinusoidal signal for counting frequency of said sinusoidal signal.
